# EUROPEAN PATENT APPLICATION

(11) **EP 1 480 453 A2**
(43) Date of publication of application: **24.11.2004**
(21) Application number: 04252918.0
(22) Date of filing: 19.05.2004
(51) Int. Cl.: H04N 5/335

(54) **System and method for USB compatible I-Frame only MPEG image compression**

(30) Priority: 20.05.2003 US 442835
(71) Applicant: OmniVision Technologies, Inc., Sunnyvale, California 94089 (US)
(72) Inventor: Mingjian, Zheng, Cupertino, CA 95014 (US); Weifeng, Huang, Sunnyvale CA 94089 (US)
(74) Representative: Hackney, Nigel John

(57) **Abstract**

A system and method for image or video compression for an imaging device are disclosed herein. The image or video compression comprises a MPEG I-frame codec. The MPEG I-frame codecs are implemented within a single integrated circuit chip with an imaging array. Further, a USB controller is included in the same integrated circuit chip to package the compressed I-frames into a USB compliant data stream. Further, in other embodiments, an imaging array is included in the same integrated circuit die with the USB controller and MPEG I-frame codec.

## Description

The present invention relates to image compression, and more particularly, the present invention relates to imaging compression and/or decompression in imaging devices.

For an object to be captured as a still or moving image with sufficient detail for later presentation to a person, such an image is captured as a large data set. However, due to the limited storage or transfer capability of imaging devices (e.g., digital cameras or digital camcorders), not all of the data associated with the captured image can be maintained. Instead, image compression is utilized to reduce the data size without unduly losing image details.

JPEG (Joint Photographic Experts Group), motion JPEG (M-JPEG), and MPEG (Moving Pictures Experts Group) are examples of industry standards for image compression. JPEG and M-JPEG image compressions can be implemented with small hardware size and low cost, but the compression ratio is less than that of MPEG. On the other hand, MPEG image compression can achieve high compression ratio, but requires a large hardware size that is also high in cost.

Hence, depending on cost and/or size considerations, certain image compression methods may be utilized. When the compressed images are to be viewed by a person, a corresponding decompression process is utilized to decode or reassemble the compressed images into a format resembling the original images.

Thus, it would be beneficial to achieve image compression that provides the advantages of existing compression/decompression methods without the disadvantages of the existing compression/decompression methods.

### BRIEF DESCRIPTION OF THE DRAWINGS

The exemplary embodiments will become more fully understood from the following detailed description, taken in conjunction with the accompanying drawings, wherein like reference numerals denote like elements, in which

Figure 1 is a block diagram of one embodiment of an imaging device of the present invention.

Figure 2 is a detailed block diagram of the pixel array section of the image sensor of Figure 1.

Figure 3 is a detailed block diagram of one embodiment of an I-Frame MPEG encoder included in the imaging device of Figure 1.

As is conventional in the field of circuit representation, sizes of electrical components are not drawn to scale, and various components can be enlarged or reduced to improve drawing legibility. Component details have been abstracted in the figures to exclude details such as position of components and certain precise connections between such components when such details are unnecessary to the invention.

A system and method for image compression and/or decompression in an imaging device are disclosed herein. The image compression/decompression scheme is preferably implemented in an integrated circuit. The image compression/decompression scheme may require relatively small hardware size and low cost. The image compression/decompression scheme may improve the compression ratio of a MPEG encoder/decoder. Further, in another aspect of the present invention, a CMOS image sensor may be provided that has integrated onto the same die the image compression encoder and a USB controller.

MPEG encoding has three types of frames: I (intra) Frame, P (predictive) Frame, and B (bi-directionally predictive) Frame. It is relatively complex and expensive to implement P Frame and B Frame encoding. However, MPEG I-Frame encoding is self contained, without reference to other frames, and requires much less hardware to implement than the complete MPEG set. An example of I-Frame encoding is shown in U.S. Patent No. 5,768,537 to Butter et al.

Additionally, the Universal Serial Bus (USB) is a well known industry standard used for the transfer of large amounts of data between devices. One major advantage of the USB protocol is the ability to support plug and play operation, allowing easy installation of peripherals. Because of the popularity of the USB protocol, many peripheral devices must include an integrated circuit that serves as a USB transceiver for the peripheral. Therefore, in the prior art, USB compliant imaging devices required at least two integrated circuits: one for the actual CMOS image sensor and a USB transceiver (referred to also as a USB controller).

The present invention most preferably combines the idea of I-frame only compression with USB data transfer to provide a method for transferring image data from a CMOS image sensor. In one embodiment, the I-Frame only encoder and USB controller are both integrated onto the same integrated circuit die as the CMOS image sensor.

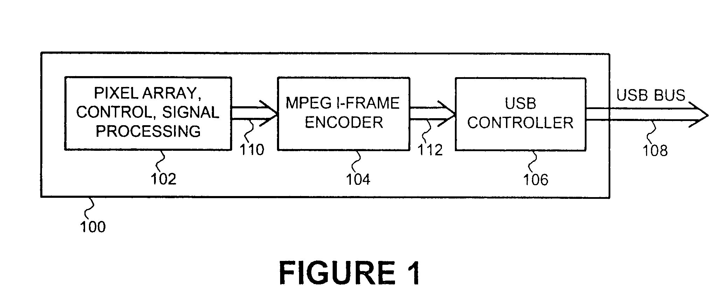

Referring to Figure 1, a block diagram of one embodiment of an integrated I-Frame only MPEG compression, USB compatible, image sensor 100 of the present invention is shown. The image sensor 100 is configured to capture images of a still and/or moving object and provide conditioned data corresponding to the captured images to another device or for display.

The image sensor 100 includes a pixel array, control, readout, and signal processing section 102 ("pixel array section" for short), a MPEG I-frame encoder 104, and a USB controller 106. The image sensor 100 connects to other devices by means of a USB bus 108. Further, internal buses 110 and 112 carry data within the image sensor 100.

The pixel array section 102 contains the integrated circuitry required for the capture of incident light, conversion of that incident light to a signal, amplification of the signal, readout of the signal, control of the image capture operation (including frame timing), and signal processing of the data into a form suitable for I-Frame encoding. Examples of the design of the pixel array section 102 can be found in the integrated circuits commercially sold by the assignee of the present invention under the "OVxxxx" product numbers.

The USB controller 106 operates to transmit and receive data in accordance with the USB protocol. For this reason, the USB controller 106 is also referred to as a USB transceiver. The USB controller 106 is communicatively connected to the MPEG I Frame encoder 104 using the internal bus 112.

The USB controller 106 is connected via a USB bus 108 to a USB host device (not shown). Examples of USB host devices are too many to list, but may include personal computers, printers, plotters memory storage devices (e.g. memory sticks, portable hard drives, or recordable CD or DVD devices), game consoles, handheld systems (e.g., personal digital assistants (PDA)), servers, or display devices.

Depending upon the USB host's demands, the USB controller 106 transfers packed serial data (comprising the image data) to the USB host through the USB bus 108. In general, the packed serial data that is transferred by the USB controller 106 is digital image data, which can be color or black and white images, RGB raw data, RGB composite data, and/or YC_{b}Cᵣ data with or without additional image processing and data compression. In this embodiment, the packed serial data that is transferred are the I-Frames output by the I-Frame encoder 104.

The USB controller 106 can be of conventional design that is available from multiple vendors that have developed USB controllers. Optionally, image/signal processing, data compression, non-volatile and/or volatile memory may be incorporated into the USB controller 106. Alternatively, the USB controller 106 may be of substantially similar design to the Model OV519 product designed and manufactured by the assignee herein.

The image sensor 100 can either be controlled by the USB host through the USB bus 106 with reading or writing parameters or commands, or alternatively, be controlled locally as a stand alone camera, for example, by hard wired logic, programmable logic, or I/O pins.

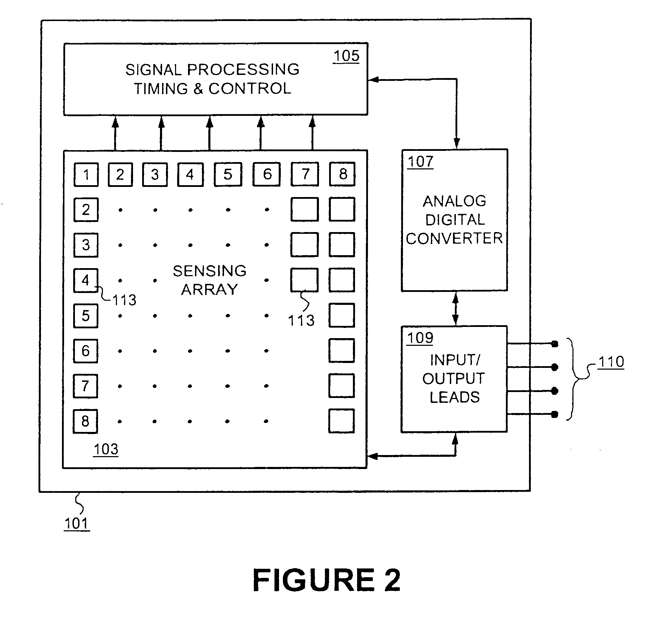

Figure 2 illustrates in greater detail the pixel array section 102 shown in Figure 1. The pixel array section 102 includes a sensing array 103, signal processing, timing, and control area 105, analog to digital converter (ADC) 107, and input/output section 109.

The sensing array 103 includes a plurality of individual pixels 113 arranged in a two-dimensional array. In the diagram of Figure 1, the sensing array 103 has 8 columns and 8 rows. The pixel array section 102 also includes signal processing, timing, and control area 105. As the name implies, this portion contains the logic and other integrated circuit devices that perform the reading out of the sensing array 103, signal processing of the data read out from the sensing array 103, and various timing and other control functions

Input/output portion 109 is used by the pixel array section 102 to communicate with the I-Frame encoder 104 using internal bus 110. As already discussed above, the internal bus 110 is used to primarily transfer image data to the I-Frame encoder 104.

Further, signal processing, timing, and control section 105 may itself include a memory storage, bus, clock, controller, and/or a processor. The signal processing, timing, and control section 105 conditions the output signals from the sensing array 103 to be suitable for compression or encoding by the I-Frame encoders 104. For example, the control section 105 may normalize, categorize, and transmit the output signals from the sensing array 103 into suitable chunks to the I-Frame encoder 104.

In an alternative embodiment, the pixel array section 102 is replaced with an image interface section. The image interface section is adapted to receive image data from an external source, such as a stand alone imaging array. In such a situation, the imaging array would provide image data to the image interface section. The image interface section would then perform much the same function as the control section 105 described above Therefore, in this embodiment, the MPEG I-Frame encoder is combined with a USB controller and an image interface section onto a single integrated circuit die. The imaging array portion is on a separate integrated circuit.

The encoder 104, also referred to as a codec, is configured to compress (also referred to as encode) data into a MPEG (or alternatively JPEG). The encoder 104 is configured to compress data into MPEG I-frames.

The components within the imaging device 100 may be implemented using hardware, firmware, and/or software. In accordance with the present invention, all of the components are preferably implemented as a single integrated circuit formed on the same integrated circuit die.

In one embodiment, each frame of image (e.g., still image) or video (eg., moving images) captured by the sensing array 103 undrgoes image/video compression. A bitmap representation of a frame includes each pixel comprising the bitmap having RGB components (red, green, and blue values). The RGB components of the pixels are converted into three-color components: a luminance Y and two chrominances U and V The image pixels, now associated with YUV components, are divided into three sets of 8x8 matrices, each set corresponding to one of the YUV components. It should be understood that a variety of other matrix sizes are also possible, such as AxA, AxB (where A is not equal to B), Ax1, 1xA, etc.

As noted above, image/video compression with the MPEG standard typically provides three types of frames interleaved with each other: I-frames (intra-coded frames), P-frames (predicted frames), and B-frames (bi-directional frames). 1-frame encoding/decoding is simple and inexpensive to implement relative to P- or B-frame encoding/decoding. Each I-frame, in contrast to P- or B-frames, contains all the information to "re-build" a frame of video; no other frame information is required. In this manner, MPEG I-frame only and (M)-JPEG frames are similar.

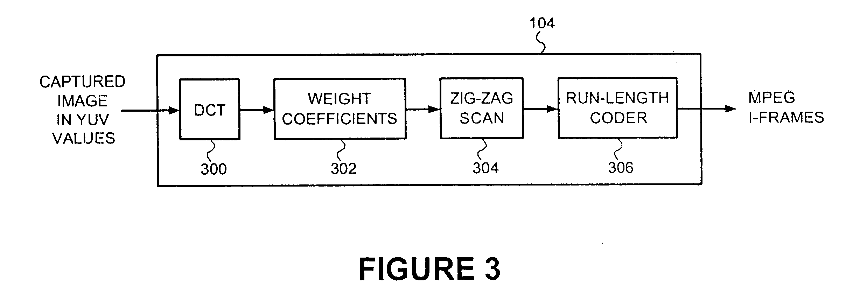

Referring to Figure 3, a detailed block diagram of the encoder 104 is shown. Each of the 8x8 matrices or pixel blocks of the YUV components of an image is applied a 2-dimensional discrete cosine transform (DCT) in a DCT 300. The 2-dimensional DCT involves using an 8x8 transform matrix to convert the 8x8 pixel blocks from a spatial domain into a frequency domain.

The coefficients of the transformed blocks are given weights, or multiplied by scale factors, as a function of their frequency coefficients (weight coefficients 302). The coefficients at the top left corner, e.g., those coefficients that represent the DC component or average brightness of the pixel block, are typically the large value coefficients and the remaining coefficients are the negligible or zero values after the weighting. In alternate embodiments, the input to the encoder/decoder 108 may be pixel blocks sized other than 8x8.

Next, at a zig-zag scan 304, the weighted coefficients are zig-zag scanned (e.g., the weighted coefficients are transmitted or serially ordered from a zig-zag sequence starting from the top left corner of the weighted block). The large or non-zero value coefficients are typically at the beginning of the sequence after the zig-zag scan.

Lastly, the zig-zag scanned coefficients are run-length encoded at a run-length coder 306. The zig-zag scanned coefficients may also be word length shortened (not shown). The resulting compressed data is in the MPEG I-frame format.

The conversion of the captured images or video from the sensing array 103 into YUV components and 8x8 pixel blocks suitable for application of DCT may be provided by the signal processing, timing, and control section 105. Alternatively, such processing may be performed within the encoder 104. In any case, the compressed MPEG I-frames are transmitted to the USB controller 106.

In this manner, a system and method for image and video compression for an imaging device are disclosed herein The image and video compression are provided with small hardware size and at low cost, which in turn enables the imaging device to be compact and low cost. The image and video compression/decompression is compliant with existing industry standards for MPEG I-frame formats. As such, the imaging device is compatible with standard peripherals.

Unless the context clearly requires otherwise, throughout the description and the claims, the words "comprise," "comprising" and the like are to be construed in an inclusive sense as opposed to an exclusive or exhaustive sense; that is to say, in a sense of "including, but not limited to.'' Words using the singular or plural number also include the plural or singular number, respectively. Additionally, the words "herein," "above,'' "below," and words of similar import, when used in this application, shall refer to this application as a whole and not to any particular portion of this application. When the claims use the words "or" in reference to a list of two or more items, that word covers all of the following interpretations of the word: any of the items in the list, all of the items in the list, and any combination of the items in the list.

From the foregoing, it will be appreciated that specific embodiments of the invention have been described herein for purposes of illustration, but that various modifications may be made without deviating from the spirit and scope of the invention. Accordingly, the invention is not limited except as by the appended claims.

## Claims

1. An image sensor comprising:
a sensing array for capturing an image and outputting an output image data;
an MPEG I-Frame encoder in communication with the sensing array to receive said output image data and to output compressed I-Frame data; and
a universal serial bus (USB) controller receiving said I-Frame data from said MPEG I-Frame encoder and packaging said I-Frame data into a USB compliant data stream,
wherein said sensing array, said MPEG I-Frame encoder, and said USB controller are all formed on a single integrated circuit die.

2. The sensor of any preceding claim further comprising:
a signal processing section coupled between said sensing array and said MPEG I-Frame encoder, said signal processing section converting said output image data into a YUV format.

3. The image sensor of any preceding claim further comprising:
a USB bus connected to said USB controller for outputting said USB compliant data stream off of said integrated circuit die.

4. The image sensor of any preceding claim wherein the output image data is red, green, blue (RGB) image data

5. A single integrated circuit die image sensor comprising:
a sensing array for capturing an image and outputting an output image data;
a signal processing section for converting said output image data into YUV data;
an MPEG I-Frame encoder in communication with the sensing array to receive said YUV data and to output compressed I-Frame data; and
a universal serial bus (USB) controller receiving said I-Frame data from said MPEG I-Frame encoder and packaging said I-Frame data into a USB compliant data stream,
a USB bus connected to said USB controller for outputting said USB compliant data stream off of said integrated circuit die,
wherein said sensing array, said MPEG I-Frame encoder, and said USB controller are all formed on a single integrated circuit die.

6. A single integrated circuit die comprising:
an image interface section for converting received image data from an external imaging array into YUV data or taking converted YUV data from an external imaging array;
an MPEG I-Frame encoder in communication with said an image interface to receive said YUV data and to output compressed I-Frame data; and
a universal serial bus (USB) controller receiving said I-Frame data from said MPEG I-Frame encoder and packaging said I-Frame data into a USB compliant data stream,
wherein said image interface section, said MPEG 1-Frame encoder, and said USB controller are all formed on a single integrated circuit die.

7. The circuit die of any of claims 5 and 6 further comprising:
a USB bus connected to said USB controller for outputting said USB compliant data stream off of said integrated circuit die.

8. The circuit die of any of claims 5 to 7 wherein the image data is red, green, blue (RGB) image data.
